# EUROPÄISCHE PATENTSCHRIFT

(11) **EP 4 136 370 B1**
(45) Veröffentlichungstag und Bekanntmachung des Hinweises auf die Patenterteilung: **09.08.2023**
(21) Anmeldenummer: 21730829.5
(22) Anmeldetag: 31.05.2021
(51) Int. Cl.: F16J 9/06, F02F 5/00, F16J 9/20

(54) **ÖLABSTREIFRING FÜR KOLBEN EINES VERBRENNUNGSMOTORS**
OIL SCRAPER RING FOR PISTONS OF AN INTERNAL COMBUSTION ENGINE
SEGMENT RACLEUR D'HUILE DESTINÉ À DES PISTONS D'UN MOTEUR À COMBUSTION INTERNE

(30) Priorität: 28.07.2020 DE 102020119789
(43) Veröffentlichungstag der Anmeldung: 22.02.2023
(73) Patentinhaber: Federal-Mogul Burscheid GmbH, 51399 Burscheid (DE)
(72) Erfinder: MITTLER, Richard, 51399 Burscheid (DE); RUCH, Fabian, 51375 Leverkusen (DE)
(74) Vertreter: Kurig, Thomas
(86) Internationale Anmeldenummer: PCT/EP2021/064540
(87) Internationale Veröffentlichungsnummer: WO 2022/022875

(56) Entgegenhaltungen:
- DE-A1- 2 000 923
- GB-A- 2 307 956

## Beschreibung

### Gebiet der Erfindung

Die vorliegende Erfindung betrifft einen Ölabstreifring für Kolben eines Verbrennungsmotors, insbesondere Kolben ohne Ölablaufbohrungen.

### Stand der Technik

Ölabstreifringe sind dazu ausgelegt, Öl auf einer Zylinderwand in Umfangsrichtung zu verteilen und überschüssiges Öl von der Zylinderwand abzustreifen. Ölabstreifringe sind zur Verbesserung der Dicht- und Abstreiffunktion für gewöhnlich mit zwei Abstreifstegen versehen. Jeder dieser Stege streift überschüssiges Öl von der Zylinderwand. Es fällt also sowohl an der Unterkante des Ölabstreifringes als auch zwischen den Stegen eine gewisse Ölmenge an, die aus dem Ringbereich abgeführt werden muss. Vor allem beim Arbeitstakt eines Zweitaktmotors bzw. beim Ansaugtakt und Arbeitstakt eines Viertaktmotors muss aus dem Kurbelgehäuse stammendes Öl, das von einem oberen Abstreifsteg abgestreift wird und zwischen den Stegen anfällt, aus diesem Bereich abgeführt werden, da dieses sonst ggf. über den Ölabstreifring gelangt und dann von dem zweiten Verdichtungsring abgestreift werden muss. Ein- und zweiteilige Ölabstreifringe sind üblicherweise mit Längsschlitzen oder Bohrungen versehen, die zwischen den Ringstegen in Radialrichtung verlaufen, damit überschüssiges Öl, das sich zwischen den Abstreifstegen befindet, nach innen ablaufen kann. Das von dem oberen Steg bei einer Abwärtsbewegung eines Kolbens abgestreifte Öl wird durch diese Öffnungen im Ringkörper auf die Rückseite des Ringes in den Ringgrund geführt. Von dort aus kann das abgestreifte Öl auf unterschiedliche Weise abgeleitet werden. Üblicherweise wird das Öl über Bohrungen in der Ölabstreifnut zu einer Kolbeninnenseite geleitet, damit es von dort in die Ölwanne zurücktropfen kann. Es ist auch möglich durch so genannt Coverslots abgestreiftes Öl über Aussparungen im Bereich des Kolbenbolzens an der Kolbenaußenseite zurückzuführen. Aber auch eine Kombination aus beiden Ausführungen kommt zum Einsatz.

Kolben für Hubkolbenmotoren werden überwiegend aus Aluminiumgusslegierungen aber auch Gusseisen und Stahl gefertigt. Dabei werden Rohlinge von Aluminiumkolben in Kokillen gegossen oder geschmiedet. Anschließend werden Mantelfläche, Ventiltaschen, Kolbenringnuten und die Kolbenbolzen-Bohrung mechanisch bearbeitet.

Dem entgegen stehen Kolben aus Stahl. Diese dehnen sich nur etwa halb so stark aus wie sein Aluminium-Vorgänger, weshalb das Spiel des Stahlkolbens im Aluminiumgehäuse geringer ausfallen kann und eine um 40 bis 50 Prozent reduzierte Reibung daraus resultiert. Weiterhin verbessert sich der thermodynamische Wirkungsgrad sich, denn die geringere Wärmeleitfähigkeit von Stahl bewirkt erhöhte Bauteiltemperaturen, was mit höherer Zündwilligkeit und reduzierter Brenndauer einhergeht.

Stahlkolben weisen jedoch einen großen Nachteil auf, da die Fertigung der Kanäle für einen Ablauf des Öles in der Ölabstreifnut sehr kostenintensiv ist. Daher geht der Trend bei Stahlkolben dahin, keine Ablaufkanäle mehr vorzusehen, wodurch oftmals ein Ölverbrauchsproblem entsteht.

Aus der DE 1 242 957 ist bereits ein Ölabstreifring für Hubkolben mit einem Paar in Abstand gehaltener Stege bekannt, die sich radial nach außen erstrecken und hierbei als einzige Teile unter Federdruck die Zylinderwand berühren, wobei zwischen den Stegen eine Ölsammelnut ausgebildet ist. Dabei weist der Ring an seiner unteren dem Kolbenkopf abgewandten Seite über den Umfang verteilte und in Abstand gehaltene Zwischenstücke auf, die in radialer Richtung so bemessen sind, dass unterhalb des Steges ein Ölsammelraum gebildet ist, der über Durchlässe und Öffnungen mit dem Kolbeninnenraum in Verbindung steht, und die Ölsammelnut weist zwischen den sie bildenden Stegen keine Verbindung mit dem Kolbeninnenraum auf. Ähnliche Ölabstreifringe sind auch aus GB2307956 und DE2000923 bekannt.

Die Aufgabe der Erfindung ist es, einen Ölabstreifring so auszubilden, dass dieser eine optimierte Ölabstreifwirkung für Kolben ohne Ölablaufbohrungen aufweist und somit eine Schwächung bzw. ein Reißen des Ölfilms verhindert wird.

### Zusammenfassung der Erfindung

Die Erfindung betrifft gemäß einem ersten Aspekt einen Ölabstreifring für Kolben eines Verbrennungsmotors, wobei eine Ölabstreifkolbenringnut des Kolbens ohne mindestens eine Ölablaufbohrung angeordnet ist. Der Ölabstreifring, umfasst einen Ringkörper mit einer oberen Ringflanke, einer unteren Ringflanke, einer Ringinnenseite, einer Ringaußenseite, sowie zwei Stoßflächen. An Ringaußenseite sind ein oberer Ölabstreifsteg und ein unterer Ölabstreifsteg angeordnet, die sich in Axialrichtung beabstandet voneinander in Umfangsrichtung erstrecken und die sich von der Ringaußenseite radial nach außen erstrecken. Weiterhin sind in einem Bereich zwischen dem oberen Abstreifsteg und dem unteren Abstreifsteg in Radialrichtung verlaufende Ölpassagen angeordnet. Zudem ist an der unteren Ringflanke mindestens eine in Radialrichtung verlaufende Nut gebildet.

Der Vorteil des erfindungsgemäßen Ölabstreifrings besteht darin, dass abgestreiftes Öl aus der Ölsammelnut durch die Ölpassagen hinter den Ring und von dort aus durch die mindestens eine Nut an der unteren Ringflanke in den Spalt zwischen Kolben und Zylinder abfließen kann. Dabei ist es nicht notwendig, dass irgendwelche Ölablaufbohrungen in der Ölabstreifringnut des Kolbens vorgesehen werden müssen. Da in dieser Ausführung das Öl lediglich unter die Kolbenringe transportiert wird, kann gewährleistet werden, dass der Ölfilm zwischen Kolben und Zylinder nicht geschwächt wird und nicht reißt. Durch die größere Menge Öl unterhalb der Kolbenringe kann einer Mangelschmierung entgegengewirkt werden.

In einer beispielhaften Ausführungsform des Ölabstreifrings weist die mindestens eine Nut eine konstante Tiefe und / oder eine konstante Breite auf. Die Fertigung solcher Geometrien ist kostengünstig.. eine derartige Nutgeometrie ermöglicht einen konstanten Ablauf des abgestreiften Öls.

In der erfindungsgemäßen Ausführung des Ölabstreifrings weist die mindestens eine Nut eine Tiefe oder eine Breite auf, die in Radialrichtung von innen nach außen abnimmt. Der Vorteil einer solchen Nutgeometrie besteht darin, dass der Ölabfluss einfacher gesteuert werden kann, da lediglich die geringste Querschnittsfläche der Nut eine Durchflussmenge bestimmt. Zudem kann durch diese Geometrie erreicht werden, dass der Ölfluss in Radialrichtung von außen nach innen reduziert ist und dadurch einer Mangelschmierung vorgebeugt wird.

In einer weiteren Ausführungsform des Ölabstreifrings, weist die mindestens eine Nut einen halbkreisförmigen Querschnitt aufweist. Ein halbkreisförmiger Querschnitt kann fertigungstechnisch vorteilhaft gebohrt werden und stellt zudem eine Ölabflussgeometrie ohne Störeinflüsse dar.

In einer weiteren Ausfiihrungsform des Ölabstreifrings, ist ein Nutgrund der mindestens einen Nut halbkreisförmig ausgebildet und eine Nutflanke ist parallel zu einer gegenüberliegenden Nutflanke ausgerichtet. Ein halbkreisförmiger Querschnitt des Nutgrundes kann fertigungstechnisch vorteilhaft gebohrt werden und stellt zudem eine Ölabflussfläche ohne Störeinflüsse dar, wobei die anschließenden parallelen Nutflanken ein Ölabflussvolumen erhöhen.

In einer weiteren beispielhaften Ausführungsform des Ölabstreifrings sind mehrere Nuten vorgesehen, die in Umfangsrichtung in gleichmäßigen Winkelabständen an der unteren Ringflanke angeordnet sind. Dadurch wird ein konstanter Ölabfluss gewährleistet, um Mangelschmierung an der gesamten Lauffläche vorzubeugen. Der gleichmäßige Winkelabstand bezieht sich dabei auf zwei in Umfangsrichtung nebeneinanderliegende Nuten. Weiterhin wird bevorzugt, den Ringspalt wie eine der Nuten zu betrachten.

In einer Ausführung des Kolbenrings sind, bei einer Anzahl von n > 1 Nuten, jede Nut in einem Winkelabstand von 360 / ( n + 1 ) ° zu einer anderen der mindestens einen Nut angeordnet ist, und wobei Nuten, die am nächsten an einem Ölabstreifringspalt liegen, zu diesem ebenfalls einen Winkelabstand von 360 / ( n + 1 ) ° in einer Ölabstreifringebene bzw. Ölabstreifringprojektion bezogen auf einen Mittelpunkt (30) des Ölabstreifrings aufweisen. Diese Angaben können eine Abweichung von bis zu +-3° aufwiesen. Durch diese Anordnung der Nuten wird ein konstanter Ölabfluss gewährleistet, um Mangelschmierung an dem gesamten Umfang der gesamten Lauffläche vorzubeugen. Eine Fertigung der symmetrisch angeordneten Nuten ist vorteilhaft realisierbar.

In einer anderen beispielhaften Ausfiihrungsform des Ölabstreifrings sind sechs Nuten an dem Ölabstreifring angeordnet, wobei diese in einem Winkelabstand von 14,5 ° bis 30,5 °, 104,5 ° bis 120,5 °, 149,5 ° bis 165,5 °, 194,5 ° bis 210,5 °, 239,5 ° bis 255,5 °, 329,5 ° bis 345,5 °, bevorzugt 17,5 ° bis 27,5 °, 107,5 ° bis 117,5 °, 152,5 ° bis 162,5 °, 197,5 ° bis 207,5 °, 242,5 ° bis 252,5 °, 332,5 ° bis 342,5 °, besonders bevorzugt 20,5 ° bis 24,5 °, 110,5 ° bis 114,5 °, 155,5 ° bis 159,5 °, 200,5 ° bis 204,5 °, 245,5 ° bis 249,5 °, 335,5 ° bis 339,5 ° weg von der Stoßfläche (16) oder weg von der Stoßfläche (18) in einer Ölabstreifringebene bzw. Ölabstreifringprojektion bezogen auf den Mittelpunkt (30) angeordnet sind. Eine Anzahl von sechs Nuten ist vorteilhaft, da diese Anzahl einen optimalen Ölabfluss gewährleistet und dadurch Mangelschmierung an der gesamten Lauffläche vorgebeugt wird. Die Symmetrie der Nutpositionen ist fertigungstechnisch kostenoptimiert.

In der erfindungsgemäßen Ausfiihrungsform des Ölabstreifrings ist dieser mit einer an der Ringinnenseite in Umfangsrichtung verlaufende Nut versehen, in der eine Expanderfeder, bevorzugt eine Schlauchfeder, eingelegt ist. Dieser zweiteilige Ölabstreifring besitzt im Vergleich zum einteiligen Ölabstreifring eine deutlich verringerte Querschnittsfläche. Dadurch ist der Ringkörper relativ flexibel und besitzt ein sehr gutes Formfiillungsvermögen. Die Nut an der Ringinnenseite bildet ein Federbett der Schlauchfeder und ist im Querschnitt entweder halbrund oder v-förmig ausgebildet. Die Kraft mit der die Abstreifstege des Ölabstreifrings gegen eine Zylinderinnenseite gepresst werden kommt von einer Expanderfeder, bevorzugt einer Schlauchfeder, aus warmfestem Federstahl. Die Feder liegt im Betrieb fest an der Rückseite des Ringkörpers und bildet zusammen mit diesem eine Einheit. Obwohl sich die Feder nicht gegen den Ring verdreht, dreht sich im Betreib der ganze Ölabstreifring - wie andere Ringe auch - in der Kolbenringnut in Umfangsrichtung. Die Radialdruckverteilung ist bei zweiteiligen Ölabstreifringen immer symmetrisch, weil der Anpressdruck über den gesamten Spiralfederumfang gleichmäßig groß ist.

Die Erfindung betrifft gemäß einem weiteren Aspekt einen Kolben mit mindestens einer Ölabstreifkolbenringnut, wobei der Kolben keine Ölablauföffnung von der Ölabstreifkolbenringnut in Richtung eines Kurbelgehäuses aufweist, wobei in der Ölabstreifkolbenringnut ein Ölabstreifring, wobei der Kolben aus Stahl oder Aluminium gemacht ist.

Es ist vorgesehen, Aluminiumkolben oder Stahlkolben ohne Ölablauföffnungen vorzusehen. Besonders kostenintensiv ist es bei Stahlkolben, Ölablauföffnungen vorzusehen. Der Vorteil von Stahlkolben ist jedoch, dass dieser sich nur etwa halb so stark ausdehnt wie ein Aluminiumkolben, weshalb das Spiel des Stahlkolbens im Aluminiumgehäuse geringer ausfallen kann. Dies bewirkt ein größeres effektives Spiel des Kolbens im Zylinder und reduzierte Reibung.

Weiterhin werden aufgrund höherer Festigkeit des Stahlkolbens Reibungsvorteile bei Motorbetrieb erzielt und der thermodynamische Wirkungsgrad verbessert sich, wodurch ein Verbrennungsmotor mit höheren Temperaturen arbeiten kann. Die Bauhöhe von Stahlkolben kann geringer sein als bei Aluminiumkolben, wodurch der gesamte Motor mit einer geringeren Bauhöhe ausgelegt werden kann. Eine geringere Bauhöhe und somit ein flacherer Motorblock ermöglicht dabei ein geringeres Gewicht und/oder höhere Zünddrücke im Vergleich zu einer herkömmlichen Auslegung. Durch die Verwendung des vorstehend beschriebenen Ölabstreifrings kann eine Ölabstreifkolbenringnut ohne Ölablauföffnungen von der Ölabstreifkolbenringnut in Richtung eines Kurbelgehäuses verwendet werden.

Die Erfindung betrifft gemäß einem weiteren Aspekt einen Verbrennungsmotor mit mindestens einem Kolben der mit einem der vorstehend beschriebenen Ölabstreifringe versehen ist.

Die Erfindung betrifft gemäß einem weiteren Aspekt einen Verbrennungsmotor, wobei der Kolben aus Stahl oder Aluminium hergestellt ist bzw. besteht.

Eine Abgrenzung zum Stand der Technik stellt die Einsetzbarkeit des erfindungsgemäßen Abstreifrings in Kolbenringnuten dar, die keine Ölabläufe aufweisen. Neben Ölpassagen weist der Ölabstreifring in Radialrichtung verlaufende Nuten auf, die in geometrischer Kombination ein optimales Ölabstreifverhalten gewährleisten. Dieser gezielte Ölfluss sowohl von einer Ringinnenseite in Richtung Kurbelgehäuse also auch in umgekehrter Richtung gewährleistet, dass der Ölfilm nicht abreißt oder zu dünn wird. Weiterhin ist das Verhältnis von Auflagefläche der unteren Ringflanke zu Öffnungsfläche der Nuten günstiger aufgrund der höheren mechanischen Kräfte und Temperaturen, die beim Einsatz von Kolben ohne Ölablauföffnungen, vor allem bei Stahlkolben ohne Ölablauföffnungen, wirken, da eine relativ kleine Auflagefläche ein Kolbenfressen begünstigt.

### Kurze Beschreibung der Zeichnungen

Im Folgenden werden beispielhafte Ausführungsformen der Erfindung unter Bezug auf die Figuren anhand von schematischen Darstellungen genauer beschrieben, wobei
Fig. 1 einen Ölabstreifring gemäß einer Ausführungsform der Erfindung zeigt, und
Fig. 2 eine Anordnung der Nuten an dem Ölabstreifring zeigt.

### Ausführliche Beschreibung der Zeichnungen

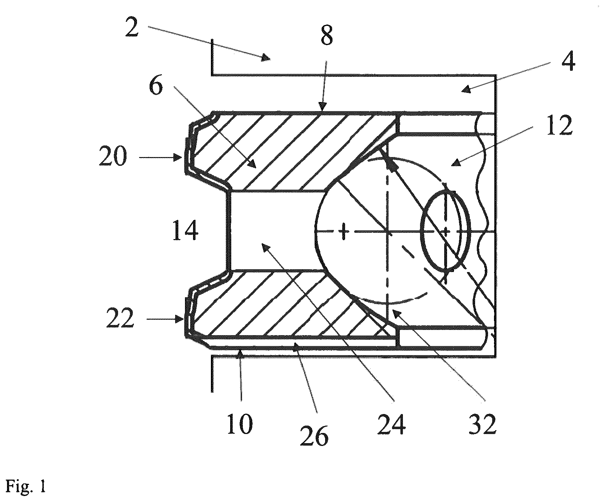

Fig. 1 zeigt eine Querschnittansicht eines Ölabstreifrings, der in einer Ölabstreifkolbenringnut 4 eines Kolbens 2 ohne Ölablaufeinrichtungen eingebaut ist. Der Ölabstreifring weist eine obere Ringflanke 8, eine untere Ringflanke 10, eine Ringinnenseite 12 und eine Ringaußenseite 14 auf. Die obere Ringflanke 8 ist brennraumseitig angeordnet und die untere Ringflanke kurbelgehäuseseitig. An der Ringaußenseite 14 sind zwei beabstandete Ölabstreifstege angeordnet. Der obere Ölabstreifsteg 20 ist brennraumseitig und der untere Ölabstreifsteg 22 kurbelgehäuseseitig angeordnet. Die beiden Ölabstreifstege 20, 22 streifen Öl von einer nicht gezeigten Zylinderinnenwand ab, die die Lauffläche für den Kolben bildet.

In dem Ringkörper 6 sind zwei Arten von Öldurchlässen angeordnet. Zum einen Ölpassagen 24, die zwischen den beiden Ölabstreifstegen 20, 22 angeordnet sind und in Radialrichtung zur Ringinnenseite verlaufen. Durch die Ölpassagen 24 kann sich zwischen den beiden Ölabstreifstegen 20, 22 ansammelnde Öl auf die Ringinnenseite 12 ablaufen. Zum anderen Nuten 26 die an der unteren Ringflanke 10 angeordnet sind und durch die das Öl sowohl von der Ringinnenseite 12 zu der Ringaußenseite 14 als auch von der Ringaußenseite 14 zu der Ringinnenseite 12 fließen kann. Sowohl die Ölpassagen 24 als auch die Nuten 26 verlaufen in einer Radialrichtung Ringkörpers 6. Eine Axialrichtung entspricht der Längsachse des Kolbens 2 bzw. dessen Bewegungsrichtung und verläuft senkrecht zu der Radialrichtung.

Ferner ist in Fig. 1 eine in Umfangsrichtung verlaufende Nut (32) zu sehen, in der eine Expanderfeder, bevorzugt eine Schlauchfeder, verläuft. Die Expanderfeder ist als Kreis angedeutet. Im Vergleich zum einteiligen Ölabstreifring weist ein zweiteiliger Ölabstreifring mit Expanderfeder einen deutlich kleinere Querschnittsfläche auf. Dadurch ist der Ringkörper 6 relativ flexibel und zeigt in Verbindung mit der Expanderfeder ein sehr gutes Formfüllungsvermögen. Der Ölabstreifring wird hauptsächlich von der Expanderfeder gegen die Zylinderwand gepresst. Die Expanderfeder wird aus warmfestem Federstahl hergestellt. Die Radialdruckverteilung ist bei zweiteiligen Ölabstreifringen immer nahezu symmetrisch, da er Anpressdruck über den gesamten Spiralfederumfang gleichmäßig groß ist. Zur Erhöhung der Lebensdauer werden die Außendurchmesser Expanderfeder geschliffen, an den Stoßflächen 16, 18 enger gewickelt oder auch mit einem Teflon-Schlauch überzogen. Durch diese Maßnahmen wird die Auflagefläche vergrößert, die Flächenbelastung verringert und dadurch der Reibverschleiß zwischen Ringkörper 6 und Expanderfeder verringert. Der Ringkörper 6 ist entweder aus Aluminium, Grauguss oder Stahl gefertigt.

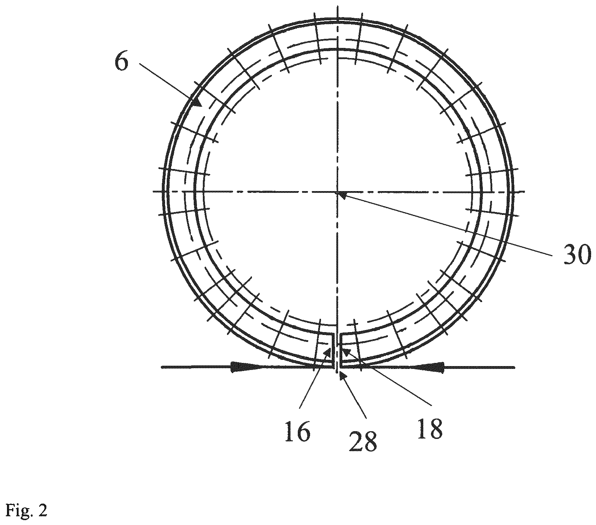

Fig. 2 zeigt eine Draufsicht in Axialrichtung des Ringkörpers 6, wobei Stoßflächen 16, 18, ein Ölabstreifringspalt 28 und ein Mittelpunkt des Ölabstreifrings 30 zu sehen sind.

### Bezugszeichenliste

- 2: Kolben
- 4: Ölabstreifkolbenringnut
- 6: Ringkörper
- 8: obere Ringflanke
- 10: untere Ringflanke
- 12: Ringinnenseite
- 14: Ringaußenseite
- 16, 18: Stoßflächen
- 20: oberer Ölabstreifsteg
- 22: unterer Ölabstreifsteg
- 24: Ölpassage
- 26: Nut
- 28: Ölabstreifringspalt
- 30: Mittelpunkt des Ölabstreifrings
- 32: in Umfangsrichtung verlaufende Nut

## Patentansprüche

1. Ölabstreif-Kolbenring (2) eines Verbrennungsmotors, wobei eine Ölabstreifkolbenringnut (4) des Kolbens (2) ohne mindestens eine Ölablaufbohrung angeordnet ist, umfassend
einen Ringkörper (6) mit
einer oberen Ringflanke (8),
einer unteren Ringflanke (10),
einer Ringinnenseite (12),
einer Ringaußenseite (14), sowie
zwei Stoßflächen (16, 18),
wobei an der Ringaußenseite (14) ein oberer Ölabstreifsteg (20) und ein unterer Ölabstreifsteg (22) angeordnet sind, die sich in Axialrichtung beabstandet voneinander in Umfangsrichtung erstrecken und die sich von der Ringaußenseite (14) radial nach außen erstrecken,
wobei in einem Bereich zwischen dem oberen Abstreifsteg (20) und dem unteren Abstreifsteg (22) in Radialrichtung verlaufende Ölpassagen (24) angeordnet sind, und wobei an der unteren Ringflanke (10) mehr als eine in Radialrichtung verlaufende Nut (26) gebildet ist,
**dadurch gekennzeichnet, dass** die mindestens eine Nut (26) eine Tiefe oder eine Breite aufweist, die in Radialrichtung von innen nach außen abnimmt, und wobei der Ölabstreifring an der Ringinnenseite (12) mit einer in Umfangsrichtung verlaufenden Nut (32) versehen ist, in der eine Expanderfeder, bevorzugt eine Schlauchfeder eingelegt ist.

2. Ölabstreifring nach Anspruüh 1, wobei die Nuten (26) einen halbkreisförmigen Querschnitt aufweisen.

3. Ölabstreifring nach einem der vorstehenden Ansprüche, wobei die mehreren Nuten (26) in Umfangsrichtung in gleichmäßigen Winkelabständen an der unteren Ringflanke (10) angeordnet sind.

4. Ölabstreifring nach einem der vorstehenden Ansprüche, wobei, bei einer Anzahl von n > 1 Nuten (26), jede Nut (26) in einem Winkelabstand von 360 / ( n + 1 ) ° zu einer anderen der mindestens einen Nut (26) angeordnet ist, und wobei Nuten (26), die am nächsten an einem Ölabstreifringspalt (28) liegen, zu diesem ebenfalls einen Winkelabstand von 360 / ( n + 1 ) ° in einer Ölabstreifringebene bzw. Ölabstreifringprojektion bezogen auf einen Mittelpunkt (30) des Ölabstreifrings aufweisen.

5. Ölabstreifring (2) nach einem der vorstehenden Ansprüche, wobei sechs Nuten (26) an dem Ölabstreifring angeordnet sind, wobei diese in einem Winkelabstand von 14,5 ° bis 30,5 °, 104,5 ° bis 120,5 °, 149,5 ° bis 165,5 °, 194,5 ° bis 210,5 °, 239,5 ° bis 255,5 °, 329,5 ° bis 345,5 °, bevorzugt 17,5 ° bis 27,5 °, 107,5 ° bis 117,5 °, 152,5 ° bis 162,5 °, 197,5 ° bis 207,5 °, 242,5 ° bis 252,5 °, 332,5 ° bis 342,5 °, besonders bevorzugt 20,5 ° bis 24,5 °, 110,5 ° bis 114,5 °, 155,5 ° bis 159,5 °, 200,5 ° bis 204,5 °, 245,5 ° bis 249,5 °, 335,5 ° bis 339,5 ° weg von der Stoßfläche (16) oder weg von der Stoßfläche (18) in einer Ölabstreifringebene bzw. Ölabstreifringprojektion bezogen auf den Mittelpunkt (30) angeordnet sind.

## Claims

1. An oil scraper piston ring (2) of an internal combustion engine, wherein an oil scraper piston ring groove (4) of the piston (2) is arranged without at least one oil drain bore, comprising
a ring body (6) having
an upper ring flank (8),
a lower ring flank (10),
a ring inner side (12),
a ring outer side (14), as well as
two abutting surfaces (16, 18),
wherein an upper oil scraper rail (20) and a lower oil scraper rail (22), which extend in the circumferential direction spaced apart from one another in the axial direction and which extend radially to the outside from the ring outer side (14), are arranged on the ring outer side (14),
wherein oil passages (24) running in the radial direction are arranged in a region between the upper scraper rail (20) and the lower scraper rail (22), and
wherein more than one groove (26) running in the radial direction is formed on the lower ring flank (10),
**characterized in that** the at least one groove (26) has a depth or a width, which decreases from the inside to the outside in the radial direction, and wherein the oil scraper ring is provided on the ring inner side (12) with a groove (32), which runs in the circumferential direction and into which an expander spring, preferably a tubular spring, is inserted.

2. The oil scraper ring according to claim 1, wherein the grooves (26) have a semi-circular cross section.

3. The oil scraper ring according to one of the preceding claims, wherein the several grooves (26) are arranged at even angular distances in the circumferential direction on the lower ring flank (10).

4. The oil scraper ring according to one of the preceding claims, wherein each groove (26) is arranged at an angular distance of 360 / (n + 1) ° from another one of the at least one groove (26), in the case of a number of n > 1 grooves (26), and wherein grooves (26), which are located closest to an oil scraper ring gap (28), likewise have an angular distance of 360 / (n + 1) ° thereto in an oil scraper ring plane and oil scraper ring projection, respectively, based on a center point (30) of the oil scraper ring.

5. The oil scraper ring (2) according to one of the preceding claims, wherein six grooves (26) are arranged on the oil scraper ring, wherein they are arranged at an angular distance of 14.5 ° to 30.5 °, 104.5 ° to 120.5 °, 149.5 ° to 165.5 °, 194.5 ° to 210.5 °, 239.5 ° to 255.5 °, 329.5 ° to 345.5 °, preferably 17.5 ° to 27.5 °, 107.5 ° to 117.5 °, 152.5 ° to 162.5 °, 197.5 ° to 207.5 °, 242.5 ° to 252.5 °, 332.5 ° to 342.5 °, particularly preferably 20.5 ° to 24.5 °, 110.5 ° to 114.5 °, 155.5 ° to 159.5 °, 200.5 ° to 204.5 °, 245.5 ° to 249.5 °, 335.5 ° to 339.5 ° away from the abutting surface (16) or away from the abutting surface (18) in an oil scraper ring plane and oil scraper ring projection, respectively, based on the center point (30).

## Revendications

1. Segment racleur d'huile de piston (2) d'un moteur à combustion interne, dans lequel une rainure de segment racleur d'huile de piston (4) du piston (2) est agencée sans au moins un trou de vidange d'huile, comprenant
un corps de segment (6) comportant
un flanc de segment supérieur (8),
un flanc de segment inférieur (10),
une face annulaire intérieure (12),
une face annulaire extérieur (14) et
deux surfaces de butée (16, 18),
dans lequel sur la face annulaire extérieure (14) un gradin racleur d'huile supérieur (20) et un gradin racleur d'huile inférieur (22) sont disposés, qui sont disposés en espacement dans la direction axiale dans la direction circonférentielle et qui s'étendent radialement vers l'extérieur depuis l'extérieur de la face annulaire (14),
dans lequel des passages d'huile (24) s'étendant dans la direction radiale sont disposés dans une zone entre le gradin racleur supérieur (20) et le gradin racleur inférieur (22), et dans lequel sur le flanc de segment inférieur de la face annulaire (10) plus d'une rainure (26) s'étendant dans la direction radiale est formée,
**caractérisé en ce que** la au moins une rainure (26) présente une profondeur ou une largeur qui diminue dans la direction radiale de l'intérieur vers l'extérieur, et dans lequel le segment racleur d'huile sur la face intérieur annulaire (12) est pourvu d'une rainure (32) s'étendant dans la direction circonférentielle, dans laquelle un ressort expanseur, de préférence un ressort flexible, est inséré.

2. Segment racleur d'huile selon la revendication 1, dans lequel les rainures (26) présentent une section transversale de forme semi-circulaire.

3. Segment racleur d'huile selon une quelconque des revendications précédentes, dans lequel la pluralité de rainures (26) sont disposées à des distances angulaires équidistantes dans la direction circonférentielle sur le flanc de segment inférieur (10) .

4. Segment racleur d'huile selon une des revendications précédentes, dans lequel, avec un nombre de n>1 rainures (26), chaque rainure (26) est disposée à une distance angulaire de 3601(n+1)° d'une autre des au moins une rainure (26), et dans lequel des rainures (26), qui sont les plus proches d'un espacement de segment racleur d'huile (28), présentent par rapport à celui-ci également une distance angulaire de 360/(n+1)° dans un plan de segment racleur d'huile, respectivement dans une projection de segment racleur d'huile par rapport à un point central (30) du segment racleur d'huile.

5. Segment racleur (2) selon une quelconque des revendications précédentes, dans lequel six rainures (26) sont disposées sur le segment racleur d'huile, celles-ci étant à une distance angulaire éloignée de 14,5° à 30,5°, 104,5° à 120,5°, 149,5° à 165,5°, 194,5° à 210,5°, 239,5° à 255,5°, 329,5° à 345,5°, de préférence 17,5° à 27,5°, 107,5° à 117,5°, 152,5° à 162,5°, 197,5 à 207,5°, 242,5° à 252,5°, 332,5° à 342,5°, de manière particulièrement préférée 20,5° à 24,5°, 110,5° à 114,5°, 155,5° à 159,5°, 200,5° à 204,5°, 245,5° à 249,5°, 335,5° à 339,5° de la surface d'impact (16) ou éloignée de la surface d'impact (18) dans un plan de segment racleur d'huile ou une protubérance du segment racleur d'huile par rapport au centre (30).
